# EUROPEAN PATENT SPECIFICATION

(11) **EP 3 542 240 B1**
(45) Date of publication and mention of the grant of the patent: **16.09.2020**
(21) Application number: 17797479.7
(22) Date of filing: 13.10.2017
(51) Int. Cl.: G06F 1/20, G06F 9/50

(54) **CIRCUITS AND METHODS PROVIDING THREAD ASSIGNMENT FOR A MULTI-CORE PROCESSOR**
SCHALTUNGEN UND VERFAHREN ZUR BEREITSTELLUNG EINER THREADZUWEISUNG FÜR EINEN MULTIKERNPROZESSOR
CIRCUITS ET PROCÉDÉS FOURNISSANT UNE ATTRIBUTION DE FIL DESTINÉE À UN PROCESSEUR MULTICOEUR

(30) Priority: 18.11.2016 US 201662423805 P; 08.12.2016 US 201615373067
(43) Date of publication of application: 25.09.2019
(73) Proprietor: Qualcomm Incorporated, San Diego, CA 92121-1714 (US)
(72) Inventor: SAEIDI, Mehdi, San Diego California 92121 (US); SAHU, Vivek, San Diego California 92121 (US); KHADIVI, Taravat, San Diego California 92121 (US); COUTTS, Ryan, San Diego California 92121 (US); ALTON, Ronald, San Diego California 92121 (US); JAIN, Palkesh, San Diego California 92121 (US); MITTAL, Rajat, San Diego California 92121 (US)
(74) Representative: Schmidbauer, Andreas Konrad
(86) International application number: PCT/US2017/056620
(87) International publication number: WO 2018/093503

(56) References cited:
- US-A1- 2008 022 076
- US-A1- 2008 034 232
- US-A1- 2016 252 943

## Description

### CROSS-REFERENCE TO RELATED APPLICATIONS

The present application claims priority to and the benefit of U.S. Non-Provisional Patent Application No. 15/373,067, filed December 8, 2016, and of U.S. Provisional Patent Application No. 62/423,805, filed November 18 2016.

### TECHINCAL FIELD

The present application relates, generally, to assigning processing threads to cores of a multi-core processor and, more specifically, to assigning processing threads based at least in part on distance between processing cores and temperature sensors.

### BACKGROUND

A conventional computing device (e.g., smart phone, tablet computer, etc.) may include a system on chip (SOC), which has a processor and other operational circuits. Specifically, an SOC in a smart phone may include a processor chip within a package, where the package is mounted on a printed circuit board (PCB) internally to the phone. The phone includes an external housing and a display, such as a liquid crystal display (LCD). A human user when using the phone physically touches the external housing and the display.

As the SOC operates, it generates heat. In one example, the SOC within a smart phone may reach temperatures of 80°C-100°C. Furthermore, conventional smart phones do not include fans to dissipate heat. During use, such as when a human user is watching a video on a smart phone, the SOC generates heat, and the heat is spread through the internal portions of the phone to the outside surface of the phone. Conventional smart phones include algorithms to control both the SOC temperature and the temperature of an outside surface of the phone by reducing a frequency of operation of the SOC when a temperature sensor on the SOC reaches a threshold level.

Demand for more performance in computing devices is increasing. One industry response to this demand has been the addition of more processor cores on an SOC to improve performance. The additional processor cores can provide higher performance, but the increase in processor cores may result in the use of more power, which leads to higher temperatures and shorter battery life. Higher temperatures and shorter battery life negatively impact reliability and user experience.

Regardless of the number of processor cores, most conventional user applications are written so that processing is concentrated in just two cores (e.g., dual processor core intensive), hence adding more processor cores may not directly translate into better user experience/performance. Further, some conventional applications are written to employ the resources of a graphics processing unit (GPU) rather than just relying on a central processing unit (CPU). However, heavy use of a GPU may result in generation of heat that affects surrounding processing units on the SOC, such as cores of the CPU, a modem, a digital signal processor (DSP), and the like. Therefore, there is a need in the art for computing systems employing multiple processing units to address heat generated by one processing unit that affects another processing unit while taking into account a number of cores that may be used by a given application. Attention is drawn to US2016252943A1 describing a processor that includes a plurality of cores each including a first storage to store a physical identifier for the core and a second storage to store a logical identifier associated with the core; a plurality of thermal sensors to measure a temperature at a corresponding location of the processor; and a power controller including a dynamic core identifier logic to dynamically remap a first logical identifier associated with a first core to associate the first logical identifier with a second core, based at least in part on a temperature associated with the first core, the dynamic remapping to cause a first thread to be migrated from the first core to the second core transparently to an operating system.
Attention is further drawn to US 2008/022076 A1 describing a method and system for thread scheduling for optimal heat dissipation. Temperature sensors measure temperature throughout various parts of a processor chip. The temperatures detected are reported to an operating system or the like for scheduling threads. In one aspect, the observed temperature values are recorded on registers. An operating system or the like reads the registers and schedules threads based on the temperature values. Further attention is drawn to US 2008/034232 A1 describing an information handling system that can include at least one memory and at least two processor cores coupled thereto. Further, the information handling system can include a controller coupled to the at least two processor cores and the at least one memory. The controller can monitor the temperature within each processor core. Based on the temperature the controller can selectively steer one or more program threads away from an overheating processor core.

### SUMMARY

The present invention is set forth in the independent claims, respectively. Preferred embodiments of the invention are described in the dependent claims.

Various embodiments are directed to circuits and methods that assign processing threads to queues of cores of a multicore processor based at least in part on a physical distance between the respective cores and a temperature sensor detecting a hot spot. For instance, one example embodiment detects a hot spot at a first processing unit (e.g., a GPU) and places a processing thread in a queue of a core at a second processing unit (e.g., a CPU) based at least in part on a distance between that core and a temperature detector associated with the hot spot.

According to one aspect of the invention, a method includes: generating temperature information from a plurality of temperature sensors within a computing device, wherein a first one of the temperature sensors is physically located at a first processing unit of the computing device; processing the temperature information to identify that the first one of the temperature sensors is associated with temperature that is at or above a threshold; and assigning a processing thread to a first core of a plurality of cores of a second processing unit in response to identifying that the first one of the temperature sensors is associated with temperature that is at or above the threshold and based at least in part on a physical distance between the first core and the first one of the temperature sensors

According to an embodiment, a system includes: a first processing unit configured to execute computer-readable instructions, wherein the first processing unit comprises a plurality of cores; a second processing unit configured to execute computer-readable instructions, wherein the first and the second processing units reside on a same substrate; and a temperature sensing device disposed within the second processing unit to measure a temperature at the second processing unit, wherein processing threads are assigned to one or more of the plurality of cores based, at least in part, on the temperature and a distance between each of the plurality of cores and the second processing unit.

According to another embodiment, there is provided a non-transitory computer readable medium having computer-readable instructions stored thereon, wherein the computer-readable instructions when executed by a first processing unit cause the first processing unit to: receive temperature information from a plurality of temperature sensing devices disposed within a semiconductor die including the first processing unit and a second processing unit, wherein a first one of the temperature sensing devices is disposed within the second processing unit; determine from the temperature information that a temperature sensed by the first one of the temperature sensing devices is above a threshold; and in response to determining that the temperature is above the threshold, assign a processing thread to either a first core of the first processing unit or a second core of the first processing unit based at least in part on respective distances of the first core and second core from the first one of the temperature sensing devices

According to another aspect of the invention, a computing device implemented on a semiconductor die includes: first means for executing processing threads, wherein the first means includes a multi-core processing unit; second means for executing processing threads; means for sensing temperature at the second means; means for determining that a temperature sensed by the temperature sensing means exceeds a threshold; and means for assigning a processing thread to a first core of the first means in response to determining that the temperature exceeds the threshold and based at least in part on a physical distance within the semiconductor die of the first core to the temperature sensing means.

### BRIEF DESCRIPTION OF THE DRAWINGS

Figure 1 is an illustration of an example computing device that may perform a method according to various embodiments.
Figure 2 is an illustration of an example internal architecture of the computing device of Figure 1, according to one embodiment.
Figure 3 is an illustration of an example SOC that may be included in the computing device of Figure 1, and may itself include a processing unit assigning threads, according to one embodiment.
Figure 4 is an illustration of an example look-up table that may be used to determine respective distances between a plurality of cores and temperature sensors, according to one embodiment.
Figure 5 is an illustration of a flow diagram of an example method of assigning threads, according to one embodiment.
Figure 6 is an illustration of a flow diagram of an example method of assigning threads, according to one embodiment.

### DETAILED DESCRIPTION

Various embodiments provided herein include systems and methods to schedule cores in a first processing unit (e.g., a CPU) in response to temperature measurements and physical distance from a second processing unit (e.g., a GPU).

In one embodiment, an SOC may include a variety of different processing units, such as a CPU, a GPU, a DSP, a modem, and the like. Each of the different processing units may include one or more temperature sensors that measure temperature and provide that temperature information to a control system of the chip. For example, the control system of the chip may include one or more algorithms as part of a kernel or even higher up in an operating system stack. One of those algorithms may include a core scheduler, which assigns threads to cores of the CPU.

As an application is run in the system, the core scheduler determines cores of the CPU to handle individual ones of the threads. The core scheduler may use any of a multitude of criteria to prioritize cores to receive threads, such as core temperature, capabilities of the core, and the like. In one embodiment, the core scheduler takes into account a temperature reading at another processing unit, such as the GPU, and physical distance on the chip between the measured hot spot of the other processing unit and individual ones of the cores. It is generally assumed in this example that a larger physical distance between an individual core and a hot spot on the other processing unit would correlate with lower thermal effects at that particular core attributable to the hot spot. Of course, other factors may come into account, such as temperature of an individual core itself. The core scheduler assigns threads to an individual core based at least in part on physical distance between that core and the detected hot spot.

Continuing with the example, the SOC includes a storage device (e.g., non-volatile memory, such as flash memory) to store a table that relates physical distance of individual cores to a particular hot spot. For example, the table may include an entry for a particular temperature sensor and fields associated with that entry to indicate a core that is farthest from the temperature sensor, a core that is second farthest from the temperature sensor, a core that is third farthest from the temperature sensor, and on and on. As the scheduler receives new threads to assign or performs a periodic rebalancing, it reads information from a variety of different temperature sensors, including sensors at processing devices other than the particular multi-core processing device. If the scheduler detects a particular hot spot, then the scheduler may consult the table and assign one or more threads to a core that is indicated by the table as being physically remote from the detected hot spot.

Various embodiments may be performed by hardware and/or software in a computing device. For instance, some embodiments include hardware and/or software algorithms performed by a processor, which can be part of an SOC, in a computing device as the device operates. Various embodiments may further include nonvolatile or volatile memory set aside in an integrated circuit chip in a computing device to store the tables correlating physical core distance with respect to multiple cores and multiple temperature sensors.

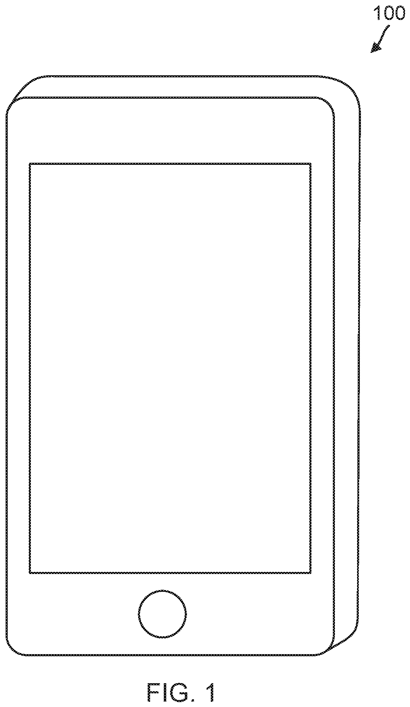

Figure 1 is a simplified diagram illustrating an example computing device 100 in which various embodiments may be implemented. In the example of Figure 1, computing device 100 is shown as a smart phone. However, the scope of embodiments is not limited to a smart phone, as other embodiments may include a tablet computer, a laptop computer, or other appropriate device. In fact, the scope of embodiments includes any particular computing device, whether mobile or not. Embodiments including battery-powered devices, such as tablet computers and smart phones may benefit from the concepts disclosed herein. Specifically, the concepts described herein provide techniques to manage heat and balance processing load in response to that heat.

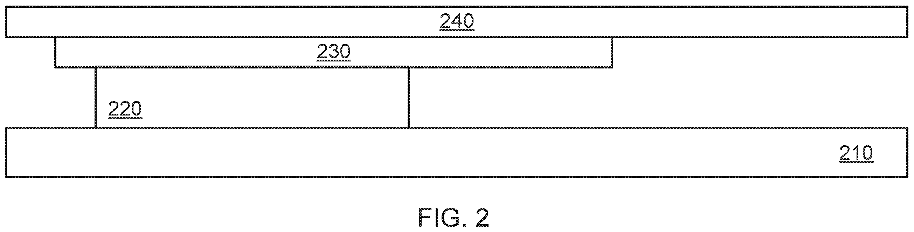

Figure 2 illustrates an example arrangement of some external and internal components of computing device 100, according to one embodiment. In this example, the processing components of the computing device are implemented as a system on chip (SOC) within a package 220, and the package 220 is mounted to a printed circuit board 210 and disposed within the physical housing of computing device 100. A heat spreader and electromagnetic interference (EMI) layer 230 is disposed on top of SOC package 220, and the back cover 240 is disposed over the layer 230. The package 220 including the processor can be mounted in a plane parallel to a plane of the display surface and a plane of the back cover 240.

Although not shown in Figure 2, it is understood that computing device 100 may include other components, such as a battery, other printed circuit boards, other integrated circuit chips and the chip packages, and the like. The battery, the printed circuit boards, and the integrated circuit chips are disposed within the computing device 100 so that they are enclosed within the physical housing of the computing device 100.

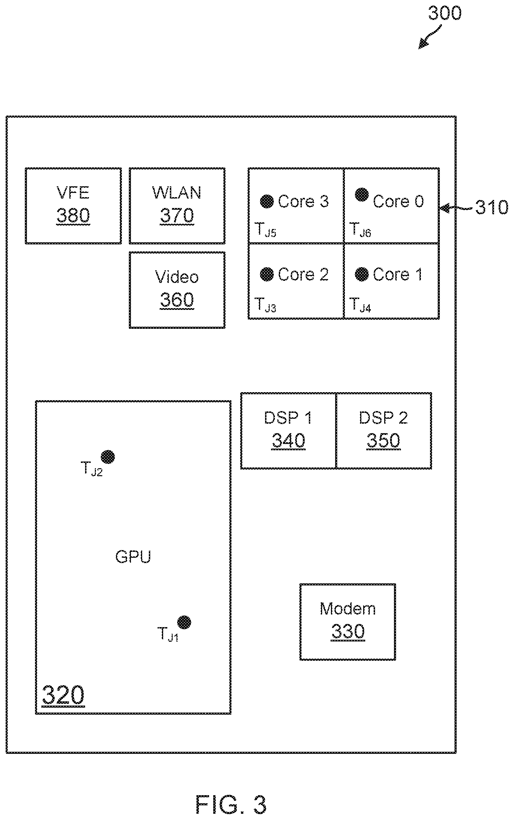

Figure 3 is an illustration of example SOC 300, which may be included within package 220 of the embodiment of Figure 2, according to one embodiment. In this example, SOC 300 is implemented on a semiconductor die, and it includes multiple system components 310-380. Specifically, in this example, SOC 300 includes CPU 310 that is a multi-core general purpose processor having the four processor cores core 0-core 3. Of course, the scope of embodiments is not limited to any particular number of cores, as other embodiments may include two cores, eight cores, or any other appropriate number of cores in the CPU 310. SOC 300 further includes other system components, such as a first DSP 340, a second DSP 350, a modem 330, GPU 320, a video subsystem 360, a wireless local area network (WLAN) transceiver 370, and a video-front-end (VFE) subsystem 380.

CPU 310 is a separate processing unit from GPU 320 and separate from the DSPs 340 and 350. Furthermore, CPU 310 is physically separate from GPU 320 and from the DSPs 340, 350, as indicated by the space between those components in the illustration of Figure 3. Such space between the components indicates portions of the semiconductor die that are physically placed between the processing units 310, 320, 340, 350. The rectangles indicating each of the processing units 310, 320, 340, 350 provide an approximation of the boundaries of each of those processing units within the semiconductor die.

Further in this example, CPU 310 executes computer readable code to provide the functionality of a CPU scheduler. For instance, in this example the CPU scheduler includes firmware that is executed by one or more of the cores of CPU 310 as part of an operating system kernel. Of course, various embodiments may implement a CPU scheduler in other appropriate ways, such as part of a higher-level component of an operating system stack. Operation of the CPU scheduler is explained in more detail below.

The placement of the components on the SOC 300 may have an effect on the performance of the components, particularly their operating temperatures. When the SOC 300 is operational, the various components 310-380 generate heat, where that heat dissipates through the material of the semiconductor die. The operating temperature of a component may be affected by its own power dissipation (self-heating) and the temperature influence of surrounding components (mutual-heating). A mutual heating component may include anything on the SOC 300 that produces heat. Thus, the operating temperature of each component on the SOC 300 may depend on its placement with respect to heat sinks and to the other components on the SOC 300 generating heat. For example, the CPU 310 and the GPU 320 may both generate significant heat when a graphics-intensive application is executing. Where these components are placed close together, one may cause the performance of the other to suffer due to the heat it produces during operation. Thus, as shown in Figure 3, the CPU 310 and the GPU 320 may be placed such that they are far enough from each other that the heat exposure of either component to the other may be reduced. Nevertheless, some processor cores (e.g., Core 2) may be positioned closer to the GPU 320, and thus more affected by heat generated by the GPU than processor cores located farther away (e.g., Core 0).

CPU 310 in this example also includes thermal mitigation algorithms, which measure temperature throughout the SOC 300 and may reduce an operating voltage or an operating frequency of one or more components in order to reduce heat generated by such components when a temperature sensor indicates a hot spot. Accordingly, SOC 300 includes temperature sensors located throughout. Example temperature sensors are shown labeled T_{J1} - T_{J6}. Temperature sensors T_{J1} and T_{J2} are implemented within GPU 320, whereas the temperature sensors labeled T_{J3} - T_{J6} are implemented within CPU 310. The scope of embodiments is not limited to any particular placement for the temperature sensors, and other embodiments may include more or fewer temperature sensors and temperature sensors in different places. For instance, other embodiments may include temperature sensors at any of components 330-380, on a PCB, or other appropriate location. The temperature sensors themselves may include any appropriate sensing device, such as a ring oscillator.

T_{J} stands for junction temperature, and at any given time a junction temperature refers to a highest temperature reading by any of the sensors. For instance, if the temperature sensor T_{J2} reads the highest temperature out of the six temperature sensors, then the value of that temperature reading is the junction temperature. As SOC 300 operates, the junction temperature may change, and the particular sensor reading the junction temperature may change.

In this example, CPU 310 provides functionality to control the heat produced within SOC 300 by temperature mitigation algorithms, which monitor the temperatures at the various sensors, including a junction temperature, and take appropriate action. For instance, one or more temperature mitigation algorithms may track the temperatures at the temperature sensors and reduce a voltage and/or a frequency of operation of any one of the components 310-380, or even an individual CPU core, when the junction temperature meets or exceeds one or more set points or thresholds. Additionally, in the embodiment of Figure 3, the CPU scheduler uses the information from the temperature sensors when determining which core (e.g., Core 0-Core 3) should be assigned a given processing thread.

During normal operation of the computing device 100 (Figure 1), the user may interact with the computing device 100 to open or close one or more applications, to consume content such as video or audio streams, or other operations. In one example in which a user opens an application, such application may be associated with tens or hundreds of processing threads that would then be placed in various queues of the processing components 310, 320, 340, 350. Each of the cores Core 0-Core 3 includes its own processing queue, and any one of the cores Core 0-Core 3 may receive processing threads as well. The CPU scheduler is responsible for placing the processing threads in the various queues according to a variety of different criteria. One particular criterion may include capability of a core or processing unit. Another criterion includes temperature of a particular core or processing unit, where a core or processing unit having a lower temperature may be preferred over another core or processing unit having a higher temperature. Yet another criterion in this example includes physical distance from a detected hot spot.

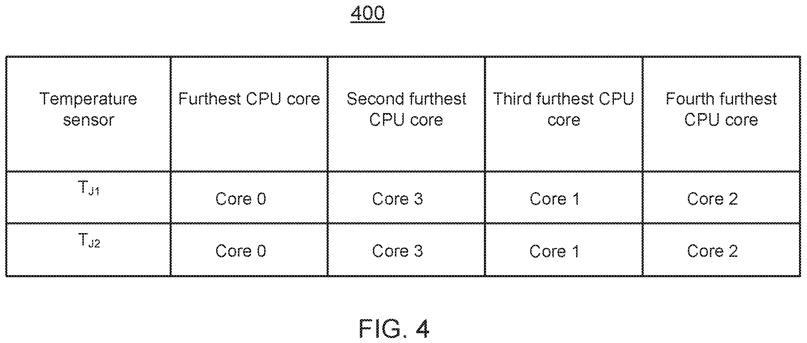

In one example operation, the CPU scheduler takes into account physical distance from a detected hot spot by consulting a table that includes fields that correlate the temperature sensor associated with the detected hot spot with respective physical distances to the various cores. An example is shown in Figure 4. Table 400 includes two rows, where each row corresponds to one of the temperature sensors T_{J1} and T_{J1}. Each of the columns correlates the respective temperature sensor with a relative physical distance to a particular one of the cores. For instance, with respect to temperature sensor T_{J1}, Core 0 is the furthest core, whereas Core 2 is the closest CPU core to that particular temperature sensor. Due to the layout and placement of GPU 320 and CPU 310, the same relative distances apply just as well to temperature sensor T_{J2}, although T_{J2} is closer to CPU 310 than is temperature sensor T_{J1}.

Continuing with the operational example, the CPU scheduler is tasked with placing a particular processing thread with a CPU core. If the CPU scheduler detects a hot spot that corresponds to either one of the temperature sensors T_{J1} or T_{J2}, the CPU scheduler may then access Table 400, parse the contents to identify the particular temperature sensor associated with the hot spot and determine relative physical placements of the cores with respect to the temperature sensor. The CPU scheduler may further rank the cores based on relative physical distance, ranking Core 0 the highest and Core 2 the lowest with respect to this particular criterion. Of course, the CPU scheduler may take into account other criteria as well. However, assuming that no other criteria overrule the physical distance from the detected hot spot, the CPU scheduler then assigns the processing thread to Core 0. In some examples, applications are written to execute on two cores of a CPU, and in such an example the CPU scheduler may assign the first processing thread to Core 0 and then assign a processing thread of the same application to Core 3 because Core 3 is the second furthest CPU core.

In various embodiments, the SOC 300 stores Table 400 in nonvolatile memory that is available to the various processing units 310-380, or at least available to CPU 310 that is executing a kernel or other operating system functionality. The CPU scheduler is programmed to access an address in the nonvolatile memory that corresponds to Table 400 when appropriate. Table 400 may be written to the nonvolatile memory during manufacture of the computing device 100 or even following manufacture of SOC 300 but before manufacture of computing device 100 itself. Specifically, the information in Table 400 is known from the design phase of the SOC 300 and thus may be written to the nonvolatile memory as early or as late as is practicable.

Various embodiments may include one or more advantages over conventional systems. For instance, various conventional systems rely more heavily on a CPU processing unit than on a GPU processing unit. Thus, a hot spot or junction temperature was more likely to occur at the CPU processing unit in such conventional systems. However, applications more recently have begun to use enough processing power of the GPU that a GPU may generate enough heat to result in a junction temperature from time to time. And while some conventional systems were capable of taking into account temperatures within the CPU processing unit when assigning processing threads in a CPU core, such conventional systems were not capable of taking into account temperatures of neighboring processing units.

By contrast, various embodiments described herein take into account a temperature of a neighboring processing unit when scheduling threads to a core in a another processing unit. For instance, in the examples of Figures 3 and 4, the CPU scheduler would respond to a detected junction temperature at the GPU 320 by ranking the CPU cores according to their respective physical distances from the particular temperature sensor sensing the junction temperature. Thus, various embodiments described herein may increase the performance of one processing unit (e.g., CPU 310) by scheduling processing threads to avoid heat dissipating from another processing unit (e.g., GPU 320).

In a system that includes temperature mitigation algorithms, a temperature mitigation algorithm may reduce operating voltage or operating frequency for a particular processing core or an entire processing unit in response to detected temperature or temperature increases rising above a predetermined limit. Thus, a processor core closest to a heat-generating processing unit would be expected to have a shorter time to mitigation and resulting lower performance. Various embodiments may increase time to mitigation for the various processor cores by reducing temperature or temperature increases from neighboring processing units.

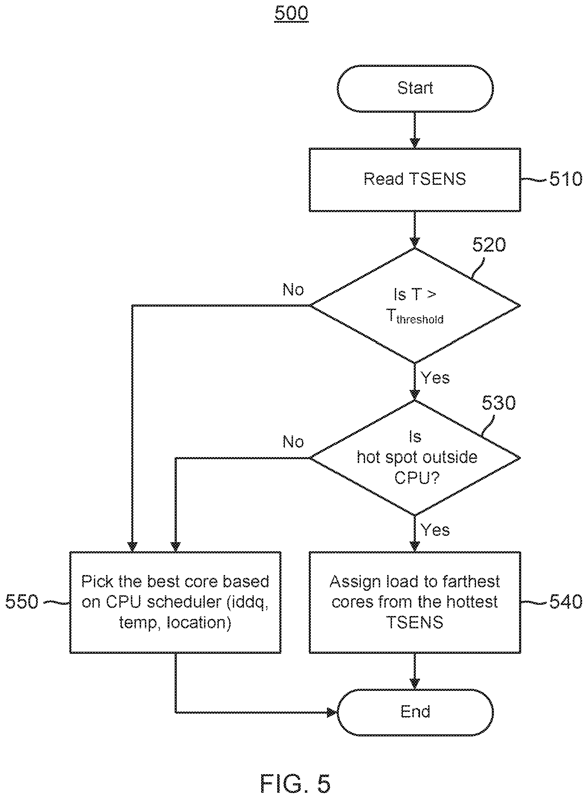

A flow diagram of an example method 500 for scheduling processing threads among the cores of a multi-core processing unit is illustrated in Figure 5. In one example, method 500 is performed by a core scheduler, which may include hardware and/or software functionality at a processor of the computing device. In some examples, a core scheduler includes processing circuitry that executes computer readable instructions to receive processing threads and to place those processing threads into appropriate cues according to various criteria. As mentioned above, in one example, a core scheduler includes functionality at an operating system kernel, although the scope of embodiments is not so limited.

The embodiment of Figure 5 includes performing actions 510-550 during normal operation and even at boot up of a chip, such as SOC 300 (Figure 3). Further, the embodiment of Figure 5 includes performing a method 500 each time the CPU scheduler assigns a processing thread. For instance, in some examples processing threads are assigned as applications are opened or as media is consumed.

In another example, the CPU scheduler performs a load balancing operation to spread processing threads among the available cores to optimize efficiency. Such load balancing may be performed at regular intervals, e.g., every 50 ms. Of course, the scope of embodiments is not limited to any particular interval for performing load balancing. In these examples, method 500 may be performed at the regular interval for load balancing and also may be performed between the load balancing intervals as new processing threads are received by the CPU scheduler as a result of new applications opening up or new media being consumed.

At action 510, the CPU scheduler reads temperature sensing data from the temperature sensors at the integrated circuit chip, such as SOC 300. Examples are shown above at Figure 3, where temperature sensors are indicated as T_{J1}-T_{J6}. Action 510 in this example may include polling the temperature sensors at a default rate during a normal operation or at other times.

At action 520, the CPU scheduler determines whether a temperature reading ("T") is above a programmed threshold (Tthreshold). If there are no temperature readings above the threshold, the method 500 moves to action 550 (described later). However, if a hot spot is detected by determining that a temperature reading is above the threshold, then the CPU scheduler moves to action 530.

In this example, a hot spot includes a physical location corresponding to a temperature sensor that is sensing a temperature the same as or greater than the threshold. The hot spot temperature may be a calculated value based on temperature sensor reading and, in some embodiments, may also include an offset temperature delta to account for actual hot spot temperature on silicon to temp sensor location. At action 530, the CPU scheduler determines whether the hot spot is inside or is outside the CPU. For instance, various embodiments may include a table or other data structure associating temperature sensors with processing units. Action 530 may include consulting such table to determine where the hotspot is located. If the hot spot is inside the CPU, then the CPU scheduler proceeds to action 550 by placing the processing thread in a queue of a core selected according to various criteria, such as quiescent current (Iddq), temperatures of respective cores (e.g., by placing a processing thread at a core having a lowest temperature among the various cores), location of core within the CPU itself, and/or the like.

However, if it is determined at action 530 that the hot spot is outside of the CPU, then the CPU scheduler moves to action 540. An example of determining that the hot spot is outside of the CPU includes measuring a temperature at one of the temperature sensors of the GPU 320 of Figure 3, where that temperature is at or above the temperature threshold. Continuing with the example, the CPU scheduler is determining which core(s) of the CPU should receive the processing thread, taking into account a hot spot detected at another processing unit, such as GPU 320. In such an instance, the CPU scheduler may assign the processing thread to a core based at least in part on the core's distance from the hot spot. As shown in the current example, at action 540, the load is assigned to the farthest core(s) from where the hottest temperature is sensed.

As noted above with respect to Figure 4, the CPU scheduler may access a table that indicates respective core distances with respect to the temperature sensor at which the hot spot is detected. The CPU scheduler may then use this information to rank the cores based on distance from the hot spot. The CPU scheduler may then place the processing thread at the core that is ranked highest or may use the ranking as one of a number of factors when placing the thread by preferring cores that are ranked more highly.

Method 500 continues, as the CPU scheduler continually receives temperature sensing data and also either places new threads or rebalances threads. Accordingly, normal operation of SOC 300 may include repeating method 500 as new threads are received or load-balancing operations are performed and until the device is powered off.

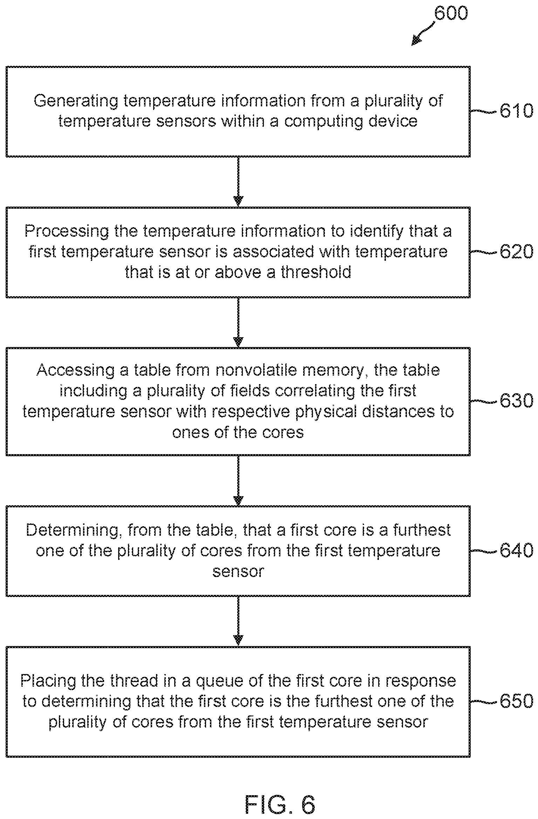

Figure 6 is an illustration of example method 600, adapted according to one embodiment. Method 600 illuminates various aspects of scheduling processing threads, and as such, complements the description above of Figure 5. Method 600 may be performed by a core scheduling algorithm at a processing unit, such as a CPU, GPU, DSP, or other processing unit that may have multiple cores. An example of a core scheduling algorithm is the CPU scheduler discussed above. Method 600 may be performed as part of a thread rebalancing operation or independently in response to new threads.

Action 610 includes generating temperature information from a plurality of temperature sensors within a computing device. An example is shown at Figure 3, in which various temperature sensors are distributed among the processing units of the SOC 300. The temperature sensors continually sense temperature at their respective locations and pass that information to the core scheduling algorithm, either at scheduled times or when polled.

At action 620, the core scheduling algorithm processes the temperature information to identify that a first one of the temperature sensors is associated with temperature that is at or above a threshold. In some examples, a temperature threshold for a processing unit of an SOC may be 100°C, although the scope of embodiments may include any appropriate threshold temperature. The core scheduling algorithm compares the temperature information to the threshold and identifies a hot spot from the comparison. Action 620 may further include processing the temperature information to identify that other ones of the temperature sensors are not associated with temperatures at or above the threshold.

At action 630, the core scheduling algorithm accesses a data structure, such as Table 400 of Figure 4, in response to identifying the temperature is at or above a threshold in action 620. The data structure includes a plurality of fields correlating the first temperature sensor with respective physical distances to multiple cores. The core scheduling algorithm then parses the data structure to match the temperature sensor itself to the information regarding the physical distances. For instance, in the examples above, the core scheduling algorithm examines a look-up table using the T_{J} identifier of the temperature sensor corresponding to the hot spot as an index to find the data regarding the physical distances to the cores. The examples above use a look-up table as the data structure, but the scope of embodiments is not so limited. Other embodiments may use different data structures as appropriate.

At action 640, the core scheduling algorithm determines, from the table, that a particular core is a furthest one of the plurality of cores from the first temperature sensor. An example is shown at Figure 4, in which the fields in the table identify the cores by their relative distances from the particular temperature sensor. At action 640, the core scheduling algorithm may rank the cores according to their distances, as indicated in the data structure.

At action 650, the core scheduling algorithm places the thread in a queue of the particular core in response to determining that the particular core is the furthest one of the plurality of cores from the first temperature sensor.

As the device operates during normal use, the core scheduling algorithm may continue to run, taking appropriate action as temperatures rise and fall and as threads are assigned or rebalanced.

The scope of embodiments is not limited to the specific method shown in Figure 6. Other embodiments may add, omit, rearrange, or modify one or more actions. For instance, action 650 may include placing the thread in a queue of a particular core that is not necessarily the furthest core of the plurality of cores from the temperature sensor. Rather, the core scheduling algorithm may take into account other factors in addition to physical distance of a core to the temperature sensor. One such factor may include capability of the core, such that if the furthest core from the temperature sensor is not recognized as being functionally appropriate for the thread, the core scheduling algorithm may select another core, taking into account physical distance from the temperature sensor as a factor. In fact, method 600 may include assigning the processing thread to a given core of a plurality of cores based at least in part on a physical distance between the core and the temperature sensor, taking into account any other appropriate criteria.

Also, in some embodiments the particular thread is associated with an application that includes other threads, and the application is programmed to use a certain subset of the cores (e.g., two of the cores). Accordingly, the core scheduling algorithm may place an additional thread from the same application with a different core, where the different core and the first core are grouped as the cores on which the application is processed. Therefore, the core scheduling algorithm may place the additional thread on the other core based at least in part on a distance of the other core to the hot spot and/or based at least in part on a distance of the first core to the hot spot.

As those of some skill in this art will by now appreciate and depending on the particular application at hand, many modifications, substitutions and variations can be made in and to the materials, apparatus, configurations and methods of use of the devices of the present disclosure without departing from the scope thereof. In light of this, the scope of the present invention should not be limited to that of the particular embodiments illustrated and described herein, as they are merely by way of some examples thereof, but rather, should be fully commensurate with that of the claims appended hereafter.

## Claims

1. A method (600) comprising:
generating (610) temperature information from a plurality of temperature sensors within a computing device, wherein a first one of the temperature sensors is physically located at a first processing unit of the computing device;
processing (620) the temperature information to identify that the first one of the temperature sensors is associated with temperature that is at or above a threshold; and
assigning a processing thread to a first core of a plurality of cores of a second processing unit in response to identifying that the first one of the temperature sensors is associated with temperature that is at or above the threshold and based at least in part on a physical distance between the first core and the first one of the temperature sensors.

2. The method of claim 1, wherein the computing device comprises a system on chip (SOC) (300), and wherein the first processing unit comprises a central processing unit (CPU) (310), and wherein the second processing unit comprises a graphics processing unit (GPU)

3. The method of claim 1, wherein the first processing unit comprises a graphics processing unit (GPU) (320), and wherein the second processing unit comprises a central processing unit (CPU) (310).

4. The method of claim 1, wherein assigning the processing thread comprises:
accessing (630) a table from nonvolatile memory, the table including a plurality of fields correlating the first one of the temperature sensors with respective physical distances to respective ones of the plurality of cores.

5. The method of claim 4, wherein assigning the processing thread further comprises:
determining (640), from the table, that the first core is a furthest one of the plurality of cores from the first one of the temperature sensors; and
placing (650) the processing thread in a queue of the first core in response to determining that the first core is the farthest one of the plurality of cores from the first one of the temperature sensors.

6. The method of claim 1, wherein assigning the processing thread is performed as part of a load balancing operation.

7. The method of claim 1, wherein assigning the processing thread is performed in response to the processing thread being generated between scheduled load-balancing operations.

8. The method of claim 1, wherein the method is performed by an operating system kernel running on the second processing unit.

9. The method of claim 1, wherein the processing thread is associated with an application, and wherein an additional processing thread is associated with the application, the method further comprising:
assigning the additional processing thread to a second core of the plurality of cores based at least in part on a physical distance between the second core and the first one of the temperature sensors.

10. The method of claim 1, wherein a second one of the temperature sensors is physically located at the second processing unit of the computing device, the method further comprising:
identifying that the second one of the temperature sensors is associated with temperature that is below the threshold.

11. A non-transitory computer readable medium having computer-readable instructions stored thereon, wherein the computer-readable instructions when executed by a first processing unit cause the first processing unit to carry out the method of any of claims 1 to 10.

12. A computing device implemented on a semiconductor die, the computing device comprising:
first means for executing processing threads, wherein the first means includes a multi-core processing unit (310);
second means (320) for executing processing threads;
means (T_{J1}, T_{J2}) for sensing temperature at the second means;
means for determining that a temperature sensed by the temperature sensing means exceeds a threshold; and
means for assigning a processing thread to a first core of the first means in response to determining that the temperature exceeds the threshold and based at least in part on a physical distance within the semiconductor die of the first core to the temperature sensing means.

13. The computing device of claim 12, wherein the computing device comprises a system on chip (SOC).

14. The computing device of claim 12, wherein the first means comprises a central processing unit (CPU), and wherein the second means comprises a graphics processing unit (GPU).

15. The computing device of claim 12, wherein the means for assigning the processing thread comprises an operating system kernel run on the first means.

## Patentansprüche

1. Ein Verfahren (600), das Folgendes aufweist:
Generieren (610) von Temperaturinformation von einer Vielzahl von Temperatursensoren innerhalb einer Recheneinrichtung, wobei ein erster der Temperatursensoren physisch an einer ersten Verarbeitungseinheit der Recheneinrichtung angeordnet ist;
Verarbeiten (620) der Temperaturinformation zum Identifizieren, dass der erste der Temperatursensoren mit einer Temperatur assoziiert ist, die an oder über einem Schwellenwert ist; und
Zuweisen eines Verarbeitungs-Threads zu einem ersten Core bzw. Kern einer Vielzahl von Kernen einer zweiten Verarbeitungseinheit ansprechend auf Identifizieren, dass der erste der Temperatursensoren mit einer Temperatur assoziiert ist, die an oder über dem Schwellenwert ist und basierend wenigstens teilweise auf einer physischen Distanz zwischen dem ersten Kern und dem ersten der Temperatursensoren.

2. Verfahren nach Anspruch 1, wobei die Recheneinrichtung ein SOC (SOC = system on chip) (300) aufweist, und wobei die erste Verarbeitungseinheit eine zentrale Verarbeitungseinheit bzw. CPU (CPU = central processing unit) (310) aufweist, und wobei die zweite Verarbeitungseinheit eine Graphikverarbeitungseinheit bzw. GPU (GPU = graphic processing unit) (320) aufweist.

3. Verfahren nach Anspruch 1, wobei die erste Verarbeitungseinheit eine Grafikverarbeitungseinheit bzw. GPU (320) aufweist, wobei die zweite Verarbeitungseinheit eine zentrale Verarbeitungseinheit bzw. CPU (310) aufweist.

4. Verfahren nach Anspruch 1, wobei das Zuweisen des Verarbeitungs-Threads Folgendes aufweist:
Zugreifen (630) auf eine Tabelle aus einem nichtflüchtigen Speicher, wobei die Tabelle eine Vielzahl von Feldern beinhaltet, die den ersten der Temperatursensoren mit jeweiligen physischen Distanzen zu jeweiligen der Vielzahl von Kernen korrelieren.

5. Verfahren nach Anspruch 4, wobei das Zuweisen des Verarbeitungs-Threads weiter Folgendes aufweist:
Bestimmen (640), aus der Tabelle, dass der erste Kern ein am weitesten entfernter der Vielzahl von Kernen von dem ersten der Temperatursensoren ist; und
Platzieren (650) des Verarbeitungs-Threads in eine Warteschlange des ersten Kerns ansprechend auf Bestimmen, dass der erste Kern der am weitesten entfernte der Vielzahl von Kernen von dem ersten der Temperatursensoren ist.

6. Verfahren nach Anspruch 1, wobei das Zuweisen des Verarbeitungs-Threads als Teil einer Lastausgleichsoperation durchgeführt wird.

7. Verfahren nach Anspruch 1, wobei das Zuweisen des Verarbeitungs-Threads ansprechend darauf durchgeführt wird, dass der Verarbeitungs-Thread zwischen eingeteilten Lastausgleichsoperationen generiert wird.

8. Verfahren nach Anspruch 1, wobei das Verfahren durch einen Betriebssystem-Kernel durchgeführt wird, der auf der zweiten Verarbeitungseinheit läuft.

9. Verfahren nach Anspruch 1, wobei der Verarbeitungs-Thread mit einer Anwendung assoziiert ist, und wobei ein zusätzlicher Verarbeitungs-Thread mit der Anwendung assoziiert ist, wobei das Verfahren weiter Folgendes aufweist:
Zuweisen des zusätzlichen Verarbeitungs-Threads zu einem zweiten Kern der Vielzahl von Kernen basierend wenigstens teilweise auf einer physischen Distanz zwischen dem zweiten Kern und dem ersten der Temperatursensoren.

10. Verfahren nach Anspruch 1, wobei ein zweiter der Temperatursensoren physisch an der zweiten Verarbeitungseinheit der Recheneinrichtung angeordnet ist, wobei das Verfahren weiter Folgendes aufweist:
Identifizieren, dass der zweite der Temperatursensoren mit einer Temperatur assoziiert ist, die unter dem Schwellenwert ist.

11. Ein nicht transitorisches computerlesbares Medium mit darauf gespeicherten computerlesbaren Instruktionen, wobei die computerlesbaren Instruktionen, wenn sie durch eine erste Verarbeitungseinheit ausgeführt werden, die erste Verarbeitungseinheit veranlassen zum Durchführen des Verfahrens nach einem der Ansprüche 1 bis 10.

12. Eine Recheneinrichtung, die auf einem Halbleiter-Die implementiert ist, wobei die Recheneinrichtung Folgendes aufweist:
erste Mittel zum Ausführen von Verarbeitungs-Threads, wobei die ersten Mittel eine erste Multi-Core-Verarbeitungseinheit (310) aufweisen;
zweite Mittel (320) zum Ausführen von Verarbeitungs-Threads;
Mittel (T_{J1}, T_{J2}) zum Abfühlen einer Temperatur an den zweiten Mitteln;
Mittel zum Bestimmen, dass eine Temperatur, die durch die Temperaturabfühlmittel abgefühlt wird, einen Schwellenwert überschreitet; und
Mittel zum Zuweisen eines Verarbeitungs-Threads zu einem ersten Kern der ersten Mittel ansprechend auf Bestimmen, dass die Temperatur den Schwellenwert überschreitet und basierend wenigstens teilweise auf einer physischen Distanz innerhalb des Halbleiter-Die des ersten Kerns zu den Temperaturabfühlmitteln.

13. Recheneinrichtung nach Anspruch 12, wobei die Recheneinrichtung ein SOC (SOC = system on chip) aufweist.

14. Recheneinrichtung nach Anspruch 12, wobei die ersten Mittel eine zentrale Verarbeitungseinheit bzw. CPU (CPU = central processing unit) aufweisen, und wobei die zweiten Mittel eine Grafikverarbeitungseinheit bzw. GPU (GPU = graphics processing unit) aufweisen.

15. Recheneinrichtung nach Anspruch 12, wobei die Mittel zum Zuweisen des Verarbeitungs-Threads einen Betriebssystem-Kernel aufweisen, der auf den ersten Mitteln ausgeführt wird.

## Revendications

1. Procédé (600) comprenant les étapes suivantes :
la génération (610) d'informations de température à partir d'une pluralité de capteurs de température dans un dispositif informatique, dans lequel un premier des capteurs de température est situé physiquement au niveau d'une première unité de traitement du dispositif informatique ;
le traitement (620) des informations de température pour identifier que le premier des capteurs de température est associé à une température qui est au niveau ou au-dessus d'un seuil ; et
l'affectation d'une file de traitement à un premier cœur d'une pluralité de cœurs d'une deuxième unité de traitement en réponse à l'identification que le premier des capteurs de température est associé à une température qui est au niveau ou au-dessus du seuil et sur la base, au moins en partie, d'une distance physique entre le premier cœur et le premier des capteurs de température.

2. Procédé selon la revendication 1, dans lequel le dispositif informatique comprend un système sur puce (SOC) (300), et dans lequel la première unité de traitement comprend une unité de traitement centrale (CPU) (310), et dans lequel la deuxième unité de traitement comprend une unité de traitement graphique (GPU) (320).

3. Procédé selon la revendication 1, dans lequel la première unité de traitement comprend une unité de traitement graphique (GPU) (320), et dans lequel la deuxième unité de traitement comprend une unité de traitement centrale (CPU) (310).

4. Procédé selon la revendication 1, dans lequel l'affectation de la file de traitement comprend l'étape suivante :
l'accès (630) à une table à partir d'une mémoire non volatile, la table comportant une pluralité de champs corrélant le premier des capteurs de température avec des distances physiques respectives à des coeurs respectifs parmi la pluralité de coeurs.

5. Procédé selon la revendication 4, dans lequel l'affectation de la file de traitement comprend en outre les étapes suivantes :
la détermination (640), à partir de la table, que le premier cœur est le cœur le plus éloigné parmi la pluralité de cœurs par rapport au premier des capteurs de température ; et
le placement (650) de la file de traitement dans une file d'attente du premier cœur en réponse à la détermination que le premier cœur est le plus éloigné parmi la pluralité de cœurs par rapport au premier des capteurs de température.

6. Procédé selon la revendication 1, dans lequel l'affectation de la file de traitement est mise en oeuvre en tant que partie d'une opération d'équilibrage de charge.

7. Procédé selon la revendication 1, dans lequel l'affectation de la file de traitement est mise en œuvre en réponse au fait que la file de traitement est généré entre des opérations d'équilibrage de charge planifiées.

8. Procédé selon la revendication 1, dans lequel le procédé est mis en oeuvre par un noyau du système d'exploitation fonctionnant sur la deuxième unité de traitement.

9. Procédé selon la revendication 1, dans lequel la file de traitement est associé à une application, et dans lequel une file de traitement supplémentaire est associé à l'application, le procédé comprenant en outre l'étape suivante :
l'attribution de la file de traitement supplémentaire à un deuxième cœur de la pluralité de cœurs sur la base, au moins en partie, d'une distance physique entre le deuxième cœur et le premier des capteurs de température.

10. Procédé selon la revendication 1, dans lequel un deuxième des capteurs de température est situé physiquement au niveau de la deuxième unité de traitement du dispositif informatique, le procédé comprenant en outre l'étape suivante :
l'identification que le deuxième des capteurs de température est associé à une température qui est en-dessous du seuil.

11. Support lisible par ordinateur non transitoire sur lequel sont stockées des instructions lisibles par ordinateur, dans lequel les instructions lisibles par ordinateur, quand elles sont exécutées par une première unité de traitement, forcent la première unité de traitement à mettre en oeuvre le procédé selon l'une quelconque des revendications 1 à 10.

12. Dispositif informatique implémenté sur une puce semiconductrice, le dispositif informatique comprenant :
un premier moyen pour exécuter des files de traitement, dans lequel les premiers moyens comportent une unité de traitement multicœur (310) ;
des deuxièmes moyens (320) pour exécuter des files de traitement ;
des moyens (T_{J1}, T_{J2}) pour détecter la température au niveau des deuxièmes moyens ;
des moyens pour déterminer qu'une température détectée par les moyens de détection de température dépasse un seuil ; et
des moyens pour affecter une file de traitement à un premier cœur des premiers moyens en réponse à la détermination que la température dépasse le seuil et sur la base, au moins en partie, d'une distance physique dans la puce semiconductrice entre le premier cœur et les moyens de détection de température.

13. Dispositif informatique selon la revendication 12, dans lequel le dispositif informatique comprend un système sur puce (SOC).

14. Dispositif informatique selon la revendication 12, dans lequel les premiers moyens comprennent une unité de traitement centrale (CPU), et dans lequel les deuxièmes moyens comprennent une unité de traitement graphique (GPU).

15. Dispositif informatique selon la revendication 12, dans lequel les moyens pour affecter la file de traitement comprennent un noyau du système d'exploitation fonctionnant sur les premiers moyens.
